# EUROPEAN PATENT APPLICATION

(11) **EP 4 606 616 A1**
(43) Date of publication of application: **27.08.2025**
(21) Application number: 23898039.5
(22) Date of filing: 27.09.2023
(51) Int. Cl.: B60K 6/40, B60K 6/38

(54) **HYBRID DRIVING MODULE**

(30) Priority: 28.11.2022 KR 20220162005
(71) Applicant: Valeo Kapec Co., Ltd., Daegu 42709 (KR)
(72) Inventor: KIM, Jung-Woo, Daegu 42709 (KR); JO, A-Ron, Daegu 42709 (KR); PARK, Jin-Su, Daegu 42709 (KR)
(74) Representative: Isarpatent
(86) International application number: PCT/KR2023/015033
(87) International publication number: WO 2024/117505

(57) **Abstract**

The present invention provides a hybrid driving module, having high efficiency by minimizing the number of sealing points between elements configured to rotate relative to one another. An actuator configured to operate an engine clutch includes an annular cylinder provided in the housing and extending in an axial direction, an annular piston internally inserted into the annular cylinder and configured to be axially movable relative to the annular cylinder, and a transmission plate configured to press or release the engine clutch while being moved in the axial direction by the annular piston. The transmission plate is connected to the rotor hub so that a rotation thereof is restricted and an axial movement thereof is allowed. A clutch bearing is interposed between the transmission plate and the annular piston and supports a relative rotation between the transmission plate and the annular piston. In addition, a baffle plate is installed in the housing and guides and induces a flow of a fluid.

## Description

### [Technical Field]

This application claims priority to and the benefit of Korean Patent Application No. 10-2022-0162005 filed in the Korean Intellectual Property Office on November 28, 2022, the entire contents of which are incorporated herein by reference.

The present invention relates to a hybrid driving module, and more particularly, to a hybrid driving module having high efficiency by minimizing the number of sealing points between elements configured to rotate relative to one another.

### [Background Art]

A driving module used for a hybrid vehicle has a structure configured to transmit a force of a motor and a force of an engine to a transmission. The hybrid driving module includes an input member configured to receive the force from the engine, a housing configured to support a stator, a rotor hub configured to support a rotor, an engine clutch disposed between the input member and the rotor hub and configured to connect the input member and the rotor hub, an output member configured to receive the force of the motor and/or the force of the engine from the rotor hub and transmit the force to the transmission, and a power transmission part disposed between the rotor hub and the output member and configured to connect the rotor hub and the output member. The power transmission part may have a structure including a torque converter and a lock-up clutch disposed in parallel in a power system.

The engine clutch, the lock-up clutch, and the like may be installed in an inner space of the rotor hub formed in a radial direction of the rotor. After the clutch and the like are installed in the space, a hub ridge or a cover is installed to cover the space. The hub ridge is installed to rotate integrally with the rotor hub.

The input member and the rotor hub are supported by each other so as to be relatively rotatable, and the rotor hub and the output member are also supported by each other so as to be relatively rotatable.

The engine clutch and the lock-up clutch are elements configured to couple or uncouple two rotary bodies that rotate at different speeds. The engine clutch and the lock-up clutch are operated by pistons configured to move in the axial direction.

The inside of the housing of the hybrid driving module is filled with a fluid. Further, the input member, the rotor hub, and the output member, which may rotate at different speeds, are installed in the housing. In order to control the engine clutch or the lock-up clutch, a fluid sealing structure may be required between the elements that rotate relative to one another.

Korean Patent Application Laid-Open No. KR 10-2022-0097229 A discloses a hybrid driving module structure in which the fluid sealing structure is applied between elements that rotate relative to one another. In this case, a sealing member is installed between a hub ridge and a housing, which rotate relative to each other, to maintain hydraulic pressure while ensuring a flow path for supplying the hydraulic pressure required to operate an engine clutch.

When a large number of sealing elements are provided to elements that rotate relative to one another, a sealing drag increases, which adversely affects fuel economy. In addition, because the rotation occurs on a sealing boundary, a relatively large amount of oil leaks through the sealing boundary because of a centrifugal force.

### [Disclosure]

### [Technical Problem]

The present invention has been made in an effort to solve the above-mentioned problem, and an object of the present invention is to provide a hybrid driving module capable of minimizing a sealing drag by minimizing a sealing boundary between elements that rotate relative to one another.

The present invention has also been made in an effort to provide a hybrid driving module having high efficiency by minimizing the amount of leakage of oil occurring on a boundary required to be sealed.

The present invention has also been made in an effort to provide a hybrid driving module capable of smoothly supplying oil for lubrication and cooling.

The technical objects of the present invention are not limited to the above-mentioned objects, and other objects and advantages of the present invention, which are not mentioned above, may be understood from the following descriptions and more clearly understood from the embodiment of the present invention. In addition, it can be easily understood that the objects and advantages of the present invention may be realized by means defined in the claims and a combination thereof.

### [Technical Solution]

In order to achieve the above-mentioned objects, the present invention is applied to a hybrid driving module disposed between an engine and a transmission in a power system and having a motor configured to provide power to the transmission.

The hybrid driving module includes a housing configured to accommodate rotary components therein, an input member connected to the engine, configured to receive power of the engine, and extending in the axial direction, a rotor hub on which a rotor is installed, the rotor hub being configured to rotate together with the rotor, and an engine clutch disposed between the input member and the rotor hub.

The engine clutch may be pressed or released by an actuator.

The actuator includes the annular cylinder provided in the housing and extending in the axial direction, and the annular piston inserted into the annular cylinder and configured to be movable in the axial direction relative to the annular cylinder.

The annular piston may be internally or externally inserted into the annular cylinder.

The actuator includes a transmission plate configured to press or release the engine clutch while being moved in the axial direction by the annular piston.

The transmission plate is connected to the rotor hub so that a rotation thereof is restricted and an axial movement thereof is allowed. Therefore, the transmission plate may rotate together with the rotor hub.

In contrast, the annular cylinder and the annular piston are provided in the housing that does not rotate.

Therefore, a relative rotation, which corresponds to a rotational velocity of the rotor hub, occurs between the annular piston and the transmission plate.

A clutch bearing is interposed between the transmission plate and the annular piston and supports a relative rotation between the transmission plate and the annular piston in order to support a rotation of the transmission plate relative to the annular piston.

The engine clutch may be a clutch pack provided in the form of a multi-plate clutch.

The rotor hub may have a rotor side carrier that restricts a rotation of the engine clutch and allows an axial movement of the engine clutch.

The input member may have an input side carrier that restricts a rotation of the engine clutch and allows an axial movement of the engine clutch.

The rotor side carrier may be disposed radially outward of the input side carrier.

The transmission plate may be connected to the rotor side carrier.

The rotor hub may have an axial extension portion configured to support the rotor. The rotor may be installed on an outer periphery of the axial extension portion.

The rotor side carrier may be formed on an inner peripheral surface of the axial extension portion.

The rotor side carrier may have a shape in which a concave-convex shape formed in the radial direction extends in the axial direction.

A centrifugal end of the transmission plate may be connected to the rotor side carrier.

A centrifugal end of the transmission plate may have a concave-convex shape complementary to a concave-convex shape of the rotor side carrier.

The transmission plate may be disposed forward of the engine clutch.

The transmission plate may be disposed forward of the input side carrier and spaced apart from the input side carrier. That is, a predetermined interval may be provided between the front end of the input side carrier and the transmission plate positioned at a radial position corresponding to the front end of the input side carrier.

The interval prevents the transmission plate from interfering with the input side carrier when the transmission plate presses or releases the engine clutch while moving in the axial direction, and the interval allows the fluid to cool the engine clutch while flowing through the interval.

The transmission plate has a centripetal side inclined surface disposed radially inward of the front end of the input side carrier and obliquely extending forward toward the radial outer side.

The transmission plate has a centrifugal side inclined surface disposed radially outward of the front end of the input side carrier and obliquely extending rearward toward the radial outer side.

Therefore, the fluid, which is to cool the engine clutch, may be smoothly supplied to the engine clutch while being guided by the centripetal side inclined surface and the centrifugal side inclined surface.

The clutch bearing may include a first race connected to the annular piston; a second race connected to the transmission plate; and a rolling element disposed between the first race and the second race and configured to support a relative rotation between the first race and the second race.

An axial movement of the annular piston may be transmitted to the first race.

An axial movement of the second race may be transmitted to the transmission plate.

The first race may be an inner race, the second race may be an outer race, and the rolling element may be a ball.

The first race may be connected to the annular piston so that a rotation thereof is restricted.

The first race may be connected to a radial inner side portion of the annular piston.

The annular piston may have a first circumferential stopper, and the inner race may have a second circumferential stopper that interferes with the first circumferential stopper in the circumferential direction.

An axial stopper may be provided on the annular piston and restricts a maximum insertion depth of the annular piston with respect to the annular cylinder. Therefore, a maximum advanced position of the annular piston may be accurately restricted.

A front surface of the axial stopper may face a rear surface of the annular cylinder in the axial direction.

The axial stopper may be provided radially outward of the annular cylinder. Further, a front surface of the axial stopper may face a rear surface of the radial outer side cylindrical portion of the annular cylinder.

A spacer may be interposed between the second race and the transmission plate in the axial direction to adjust an interval between the engine clutch and the transmission plate. Therefore, the spacer with a thickness complementary to a position deviation is applied to eliminate the position deviation of the transmission plate caused by a manufacturing error or an assembling tolerance, such that the position of the transmission plate may be accurately set.

Further, the outer race rotates together with the transmission plate. However, for example, when the engine clutch is released, there is a likelihood that a slip occurs between the outer race and the transmission plate. In addition, the transmission plate and the outer race may be made of different materials and thus different in hardness. Therefore, a material having hardness between hardness of the second race and hardness of the transmission plate is selected as the material of the spacer, which may minimize abrasion that may occur when a slip occurs.

A baffle plate may be installed in the housing and guide a flow of the fluid for lubricating the clutch bearing and cooling the clutch pack.

The baffle plate may be connected to the housing at a side closer to the centripetal side than the annular cylinder.

The baffle plate may have a rearward extension portion disposed radially inward of the clutch bearing and extending rearward from the housing.

The rearward extension portion may have an orifice hole provided at a position corresponding to the clutch bearing in the axial direction.

The housing may have a flow path configured to supply the fluid to a space disposed radially inward of the rearward extension portion of the baffle plate.

Therefore, the fluid, which is supplied to the inner space of the housing through the flow path, may flow in the centrifugal direction by receiving the centrifugal force and be supplied to the clutch bearing through the orifice hole.

The baffle plate may further include a centrifugal extension portion connected to a rear end of the rearward extension portion, disposed rearward of the clutch bearing, and extending in the centrifugal direction from the rearward extension portion.

The input member may have the input side carrier extending radially outward of an outer peripheral surface of a rear end thereof and connected to the engine clutch.

The rearward extension portion may be disposed radially outward of the input member and disposed in parallel with the outer peripheral surface of the input member while maintaining a predetermined interval.

Therefore, the fluid supplied through the flow path may rearward along the space between the outer peripheral surface of the input member and the rearward extension portion.

The centrifugal extension portion may be disposed forward of the input side carrier and disposed in parallel with the input side carrier while maintaining a predetermined interval.

Therefore, the fluid, which moves rearward along the space between the outer peripheral surface of the input member and the rearward extension portion, may move again in the centrifugal direction along the space between the centrifugal extension portion and the input side carrier.

The input side carrier may have an inclined surface disposed radially outward of the centrifugal extension portion and obliquely extending forward toward a radial outer side.

Therefore, the fluid, which moves in the centrifugal direction along the space between the centrifugal extension portion and the input side carrier, may also move forward while moving radially outward by being guided by the inclined surface.

Of course, a hole, through which the fluid may flow, may also be provided in the axial extension portion of the input side carrier fastened to the engine clutch, such that the engine clutch may be smoothly cooled.

The input member may be supported to be rotatable relative to the housing by means of an input shaft bearing.

An annular seal may be provided forward of the input shaft bearing and installed between the housing and the input member to prevent the fluid in the housing from leaking to the outside.

The housing has a branch flow path branching off from the flow path, and an outlet port of the branch flow path may have an opened to a space between the annular seal and the input shaft bearing.

The input member may be supported to be rotatable relative to the rotor hub by means of a hub shaft bearing.

The input member may have a flow path hole configured to allow a space between the housing and the input member to communicate with a space between the input member and the rotor hub.

Therefore, the fluid, which is supplied into the housing through the flow path, may lubricate the input shaft bearing and the hub shaft bearing and then move in the centrifugal direction through a space between the input shaft carrier and a radial extension portion of the rotor hub.

### [Advantageous Effects]

According to the hybrid driving module of the present invention, the annular cylinder and the piston structure provided in the housing minimize the sealing boundary between the elements that rotate relative to one another, such that a sealing drag is minimized, and the efficiency is high.

The object of the present invention is to provide the hybrid driving module in which the sealing boundary between the elements, which rotate relative to one another, is eliminated, and the cylinder structure, which almost no leak of oil, is applied, such that the amount of leakage of oil is minimized, and efficiency is improved.

Further, according to the present invention, the bearing and the friction member are smoothly lubricated and cooled through the baffle plate and the flow path of the housing.

The specific effects of the present invention, together with the above-mentioned effects, will be described along with the description of specific items for carrying out the present invention.

### [Description of Drawings]

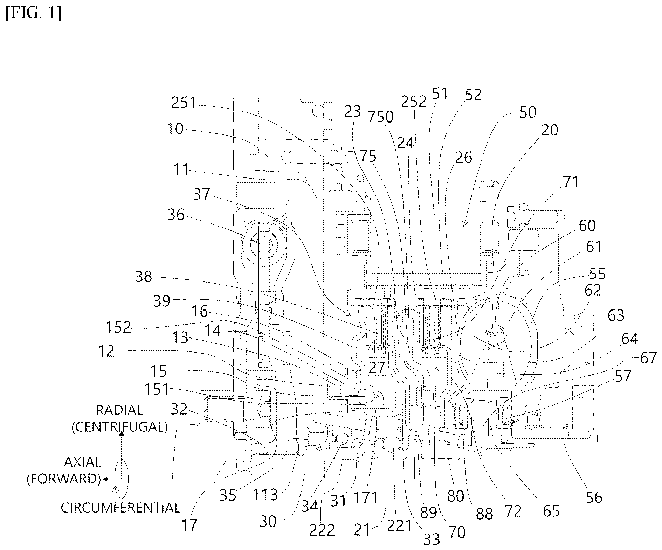

FIG. 1 is a cross-sectional view of an embodiment of a hybrid driving module according to the present invention.

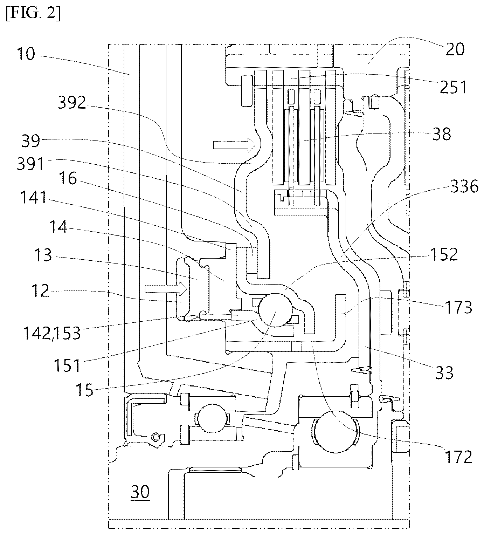

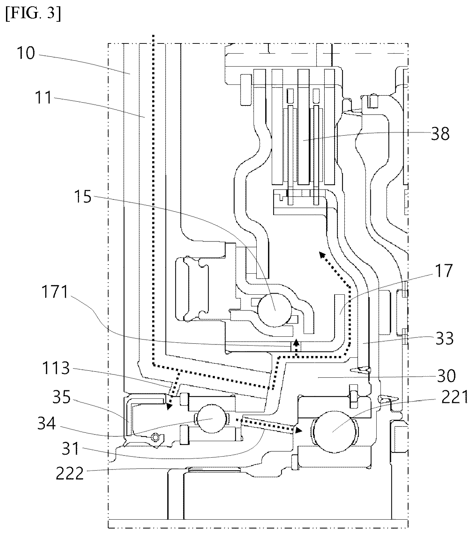

FIGS. 2 and 3 are an enlarged view of an engine clutch part of the hybrid driving module illustrated in FIG. 1. FIG. 3 is a view additionally illustrating an oil supply route.

### [Description of Reference Numerals]

10: housing, 11: second flow path (flow path), 113: branch flow path, 12: annular cylinder, 13: cup seal, 14: annular piston, 141: axial stopper, 142: first circumferential stopper, 15: clutch bearing, 151: inner race (first race), 152: outer race (second race), 153: second circumferential stopper, 16: spacer, 17: baffle plate, 171: orifice hole, 172: rearward extension portion, 173: centrifugal extension portion, 20: rotor hub, 21: hub shaft, 221: first hub shaft bearing, 222: second hub shaft bearing, 23: radial extension portion, 24: axial extension portion, 251: first rotor side carrier (rotor side carrier), 252: second rotor side carrier, 26: first accommodation space, 27: second accommodation space, 30: input member, 31: flow path hole, 32: input spline, 33: input side carrier, 336: inclined surface, 34: input shaft bearing

### [Mode for Invention]

Hereinafter, exemplary embodiments of the present invention will be described in detail with reference to the accompanying drawings.

The present invention is not limited to the embodiments disclosed herein, but will be variously changed and implemented in various different forms. The embodiments are provided so that the present invention will be thorough and complete, and also to provide a more complete understanding of the scope of the present invention to those of ordinary skill in the art. Therefore, it should be understood that the present invention is not limited to the embodiments disclosed below, but the configuration of any one embodiment and the configuration of another embodiment can be substituted or added, and the present invention includes all alterations, equivalents, and alternatives that are included in the technical spirit and scope of the present invention.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present invention. In the drawings, sizes or thicknesses of constituent elements may be exaggerated, increased, or decreased for convenience of understanding, but the protection scope of the present invention should not be restrictively construed.

The terms used in the present specification are used only for the purpose of describing particular examples or embodiments and are not intended to limit the present invention. Further, singular expressions include plural expressions unless clearly described as different meanings in the context. In the present application, the terms "comprises," "comprising," "includes," "including," "containing," "has," "having", and other variations thereof are intended to specify the presence of features, integers, steps, operations, elements, components, and/or combinations thereof disclosed in the specification. That is, in the present application, it should be understood that the terms "comprises," "comprising," "includes," "including," "containing," "has," "having", and other variations thereof do not preclude the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present invention pertains. The terms such as those defined in a commonly used dictionary should be interpreted as having meanings consistent with meanings in the context of related technologies and should not be interpreted as ideal or excessively formal meanings unless explicitly defined in the present application.

Because a hybrid driving module according to an embodiment is symmetrical with respect to an axis, only a half of the hybrid driving module based on the axis is illustrated for the convenience of illustration. In addition, for the convenience of description, a direction along a longitudinal direction of an axis defining a center of a rotation of the hybrid driving module is defined as an axial direction. That is, a forward/rearward direction or an axial direction is defined as a direction parallel to a rotation axis. A front (forward) means any one direction of a power source, e.g., a direction toward an engine. A rear (rearward) means the other direction, e.g., a direction toward a transmission. Therefore, a front surface means a surface facing forward, and a rear surface means a surface facing rearward.

A radial direction means a direction toward or away from a center of the rotation axis along a straight line passing through the center of the rotation axis on the plane perpendicular to the rotation axis. A direction radially away from the center is referred to as a centrifugal direction, and a direction toward the center is referred to as a centripetal direction.

A peripheral direction or a circumferential direction means a direction surrounding a periphery of the rotation axis. An outer periphery means an outer circumference, and an inner periphery means an inner circumference. Therefore, an outer peripheral surface is a surface facing away from the rotation axis, and an inner peripheral surface is a surface facing the rotation axis.

A circumferential surface means a surface, a normal line of which is directed in a circumferential direction.

### [Overall Structure of Hybrid Driving Module]

A hybrid driving module of the present invention is disposed between an engine and a transmission of a power system. Based on the drawings in the embodiment, the engine is disposed at the left side, and the transmission is disposed at the right side.

The hybrid driving module includes a motor 50 configured to provide power to the transmission. The motor 50 includes a stator 51 and a rotor 52.

The stator 51 is fixed to a housing 10 of the hybrid driving module. Further, the rotor 52 is disposed radially inward of the stator 51 and accommodated in the housing 10. The rotor 52 may be fixed to a rotor hub 20 disposed in the housing 10.

An input member 30 is provided at a front center of the housing 10 and connected to an engine to receive power of the engine. The input member 30 is supported to be rotatable relative to the housing 10 by means of an input shaft bearing 34.

The input member 30 more protrudes forward than the housing 10, and an input spline 32 is formed on an outer peripheral surface of the protruding portion. A torsional damper 36 is connected to the input spline 32. An input side of the torsional damper 36 is connected to the engine, and an output side of the torsional damper 36 is connected to the input member 30.

An annular seal 35 is disposed forward of the input shaft bearing 34 and interposed between an inner peripheral surface of the housing 10 and an outer peripheral surface of the input member 30. That is, a space, which is filled with a fluid supplied from the transmission, is disposed rearward of the annular seal 35, and the annular seal 35 and the housing 10 define a boundary of the space filled with the fluid. That is, the torsional damper 36 may be a dry spring damper.

The rotor hub 20 may include an axial extension portion 24 configured to fix the rotor 52, and a radial extension portion 23 extending radially inward from the axial extension portion 24. The axial extension portion 24 may have a shape similar to a cylinder extending in the axial direction.

The radial extension portion 23 is connected to an approximately central portion in the axial direction of the axial extension portion 24.

A hub shaft 21, which extends in the axial direction, is provided at a radial inner end of the radial extension portion 23. The hub shaft 21 is disposed rearward of the input member 30 in the axial direction. A partial section in the axial direction of the hub shaft 21 overlaps the input member 30. Hub shaft bearings 221 and 222 are interposed in a section in which the input member 30 and the hub shaft 21 overlap each other. The hub shaft bearings 221 and 222 support the input member 30 and the hub shaft 21 so that the input member 30 and the hub shaft 21 rotate relative to each other.

The hub shaft bearings include a first hub shaft bearing 221 disposed rearward in the axial direction, and a second hub shaft bearing 222 disposed forward in the axial direction. The embodiment discloses an example in which the first hub shaft bearing 221 is a ball bearing, and the second hub shaft bearing 222 is a needle bearing.

An axial position of the input member 30 with respect to the housing 10 is restricted by the input shaft bearing 34. An axial position of the rotor hub 20 with respect to the input member 30 is restricted by the first hub shaft bearing 221. Therefore, an axial position of the rotor hub 20 with respect to the housing 10 is also restricted.

Because the input member 30 is supported by the input shaft bearing 34 and the first hub shaft bearing 221 disposed to be spaced apart from each other in the axial direction, the input member 30 may be axially aligned with the central axis of the housing 10. Because the rotor hub 20 is supported by the first hub shaft bearing 221 and the second hub shaft bearing 222 disposed to be spaced apart from each other in the axial direction, the rotor hub 20 may be axially aligned with the central axis of the housing 10.

A back cover 55 is connected to a rear end of the axial extension portion 24. The back cover 55 is integrally fixed to the rear end of the axial extension portion 24 by means of welding or a fastening means such as a bolt.

The radial inner space of the axial extension portion 24 of the rotor hub 20 defines a space filled with a fluid such as transmission oil. The space may be divided into a first accommodation space 26 and a second accommodation space 27 by the radial extension portion 23. The first accommodation space 26 may be defined as a space between the radial extension portion 23 and the back cover 55 in the axial direction. The second accommodation space 27 may be defined as a front space of the radial extension portion 23.

The input member 30 is disposed in the second accommodation space 27. The input member 30 and the rotor hub 20 are connected through an engine clutch 37. The engine clutch 37 is also disposed in the second accommodation space 27. The engine clutch 37 has a first clutch pack 38 in which a plurality of friction plates are disposed in the axial direction.

A radial outer side of the first clutch pack 38 is fixed to a first rotor side carrier 251 provided on an inner peripheral surface of the axial extension portion 24 of the rotor hub 20, and a radial inner side of the first clutch pack 38 is fixed to an input side carrier 33 extending radially outward from a rear end of the input member 30.

A transmission plate 39 is disposed forward of the first clutch pack 38. A centrifugal end of the transmission plate 39 is connected to the first rotor side carrier 251. Therefore, the transmission plate 39 is restricted in rotation with respect to the rotor hub 20, but the transmission plate 39 may move in the axial direction.

An annular cylinder 12, which extends in the axial direction and is opened rearward, is provided on a rear surface of the housing 10. An annular piston 14 is internally inserted into the annular cylinder 12. A cup seal 13 is installed at a front end of the annular piston 14 and seals a bore of the annular cylinder 12 and an outer peripheral surface of the annular piston 14 to prevent oil from leaking between the bore of the annular cylinder 12 and the outer peripheral surface of the annular piston 14.

The annular piston 14 and the transmission plate 39 are connected to each other by means of a clutch bearing 15. An inner race 151 of the annular piston 14 is connected to the annular piston 14 so as to be restricted in rotation by a method such as key-coupling.

An outer race 152 of the annular piston 14 faces a centripetal portion of the transmission plate 39 in the axial direction. A spacer 16 is interposed between the outer race 152 disposed axially forward and the transmission plate 39 disposed rearward.

Although not illustrated, the housing 10 has a first flow path that communicates with the annular cylinder 12. When the fluid is supplied to the annular cylinder 12 through the first flow path, the annular piston 14 and the transmission plate 39 press the first clutch pack 38 while moving rearward and couple the input member 30 and the rotor hub 20. Therefore, power of the engine is transmitted to the rotor hub 20 through the input member 30. When the fluid is discharged from the annular cylinder 12 through the first flow path, the annular piston 14 and the transmission plate 39 release the first clutch pack 38 while moving forward and decouple the input member 30 and the rotor hub 20.

The housing 10 has a second flow path 11 that communicates with the second accommodation space 27. In the housing 10, the first flow path and the second flow path 11 do not communicate with each other.

In the second accommodation space 27, the input shaft bearing 34, a clutch bearing 47, and the hub shaft bearings 221 and 222 are disposed, and the first clutch pack 38 is also disposed. The fluid supplied to the second accommodation space 27 through the second flow path 11 lubricates the bearings and cools the first clutch pack 38.

In order for the fluid, which is accommodated in the second accommodation space 27, to smoothly flow along the input shaft bearing 34 and the hub shaft bearings 221 and 222 through the second flow path 11, the second flow path 11 has a branch flow path 113 extending inward toward an inner peripheral surface of the housing 10 in which the input shaft bearing 34 is installed, and the input member 30 has a flow path hole 31 configured to allow a space between an inner peripheral surface of the housing 10 and an outer peripheral surface of the input member 30 and a space between an inner peripheral surface of the input member 30 and an outer peripheral surface of the hub shaft 21 to communicate with each other.

An outlet port of the branch flow path 113 is directed toward the centripetal side and opened to a space between the annular seal 36 and the input shaft bearing 34. An inlet port of the flow path hole 31 is directed toward a rear space of the input shaft bearing 34, and an outlet port of the flow path hole 31 is directed toward a front space of the first hub shaft bearing 221.

An output member 80 may be accommodated in the first accommodation space 26 of the rotor hub 20, and a power transmission part may be accommodated in the first accommodation space 26 of the rotor hub 20 and transmit a rotational force of the rotor hub 20 to the output member 80.

The power transmission part may include a fluid clutch and the lock-up clutch 70.

The fluid clutch may be a torque converter 60. That is, the fluid clutch may include an impeller 61 and a turbine 62 facing each other and having a half torus shape, and a reactor 64 disposed between the impeller 61 and the turbine 62 and connected to a fixed end 65 through a one-way clutch 67.

The impeller 61 may be provided on the back cover 55. Therefore, the rotation of the impeller 61 relative to the rotor hub 20 is restricted.

A pump drive hub 56 is provided at a radial inner side of the back cover 55 and extends rearward.

The fixed end 65 may be disposed forward and radially inward of the pump drive hub 56, and a cover bearing 57 may be interposed between the fixed end 65 and the pump drive hub 56. The output member 80 may be disposed forward and radially inward of the fixed end 65, and a bearing 88 may be interposed between the output member 80 and the fixed end 65.

When the rotor hub 20 rotates, a rotational force of the rotor hub 20 operates a pump by means of the back cover 55 and the pump drive hub 56. Therefore, the transmission oil is supplied to the first accommodation space 26 through a space between the output member 80 and the fixed end 65. Therefore, the first accommodation space 26 is filled with the fluid for operating the fluid clutch and cooling the second clutch pack 71. As described above, the oil introduced into the first accommodation space 26 may be discharged to the transmission through the space between the fixed end 65 and the back cover 55. During the process of circulating the fluid, the second clutch pack 71 may be cooled, and the one-way clutch 67, the cover bearing 57, and the bearing 88 may be lubricated.

The turbine 62 is disposed forward of the impeller 61 while facing the impeller 61, and a radial inner side of a turbine plate 63, on which the turbine 62 is installed, is connected to the output member 80. The output member 80 is connected to an input side of the transmission.

The reactor 64 is disposed between the impeller 61 and the turbine 62. The reactor 64 is installed at the fixed end 65 by means of the one-way clutch 67. The reactor 64 rotates relative to the back cover 55 and rotates relative to the output member 80. The cover bearing 57 is interposed between the reactor 64 and the back cover 55 and the bearing 88 is interposed between the reactor 64 and the output member 80 in order to allow and support the relative rotation between the back cover 55 and the reactor 64 and the relative rotation between the output member 80 and the reactor 64. That is, the output member 80 and the back cover 55 are rotatably supported on the fixed end 65.

In a state in which the rotor hub 20 and the output member 80 are different in rotational velocity, the rotational force of the motor and/or the engine may be transmitted to the output member 80 through the torque converter 60.

A lock-up clutch 70 is disposed forward of the turbine plate 63 in the first accommodation space 26. The lock-up clutch 70 has the second clutch pack 71 in which a plurality of friction plates are disposed in the axial direction.

The second clutch pack 71 is disposed between the rotor hub 20 and the output member 80 and connects or disconnects the rotor hub 20 and the output member 80.

A radial outer side of the second clutch pack 71 is connected to a second rotor side carrier 252 provided on an inner peripheral surface of the axial extension portion 24 of the rotor hub 20, and a radial inner side of the second clutch pack 71 is connected to an output side carrier 72. The output side carrier 72 is fixed to the output member 80.

A piston member 75 configured to press or release the second clutch pack 71 is installed in the first accommodation space 26.

The piston member 75 is disposed rearward of the radial extension portion 23 and disposed forward of the lock-up clutch 70. A radial inner end of the piston member 75 slidably adjoins an outer peripheral surface of the output member 80. The radial outer end of the piston member 75 slidably adjoins the inner peripheral surface of the axial extension portion 24.

A space between the radial extension portion 23 and the piston member 75 defines an operation chamber 750 for the piston member 75.

The output member 80 has a hollow shaft shape. The hollow portion of the output member 80 defines a flow path through which the fluid is supplied to the operation chamber 750. A flow spacer 89 is interposed between the output member 80 and the radial extension portion 23, maintains an interval between the output member 80 and the radial extension portion 23, and allows the fluid to flow.

When the hydraulic pressure is supplied to the operation chamber 750 and the pressure in the operation chamber 750 becomes higher than the pressure in the first accommodation space 26, the piston member 75 is retracted, and the lock-up clutch 70 couples the rotor hub 20 and the output member 80. When the pressure in the operation chamber 750 becomes lower than the pressure in the first accommodation space 26, the piston member 75 is advanced, and the lock-up clutch 70 decouples the rotor hub 20 and the output member 80.

### [Actuator Structure for Operating Engine Clutch]

The multi-plate clutch-type first clutch pack 38, which constitutes the engine clutch 37, may be pressed or released by an actuator.

The actuator includes the annular cylinder 12 provided in the housing 10 and extending in the axial direction, and the annular piston 14 inserted into the annular cylinder 12 and configured to be movable in the axial direction relative to the annular cylinder 12. The oil may enter or exit an inner space defined by a main wall of the annular cylinder 12 and the annular piston 14. This configuration has a concentric slave cylinder (CSC) structure that prevents almost no leak of oil.

When the oil is supplied to the annular cylinder 12 through the first flow path of the housing 10, the annular piston 14 moves rearward. When the oil in the annular cylinder 12 is discharged again through the first flow path, the annular piston 14 moves forward.

The annular piston 14 is internally inserted into the annular cylinder 12. That is, an outer peripheral wall of the annular piston 14 slides along an inner peripheral surface of a centrifugal sidewall of the annular cylinder 12, and an inner peripheral surface of the annular piston 14 slides along an outer peripheral surface of a centripetal sidewall of the annular cylinder 12. The cup seal 13 is provided at a front end of the annular piston 14 and prevents a leak of oil.

The transmission plate 39 is provided forward of the first clutch pack 38. The transmission plate 39 is disposed between the annular piston 14 and the first clutch pack 38. The transmission plate 39 is connected to the rotor hub 20 so that a rotation thereof is restricted and an axial movement thereof is allowed. Therefore, the transmission plate 39 may rotate together with the rotor hub 20.

In contrast, the annular cylinder 12 and the annular piston 14 are installed in the housing 10 that is a stationary component.

The transmission plate 39 presses or releases the engine clutch 37 while being moved in the axial direction by the annular piston 14.

Therefore, a relative rotation, which corresponds to a rotational velocity of the rotor hub 20, occurs between the annular piston 14 and the transmission plate 39.

According to the embodiment, because the connection portion between the annular piston 14 and the transmission plate 39, which rotate relative to each other, is provided in the second accommodation space 27 filled with oil, it is not necessary to provide a sealing element on the connection portion. That is, the CSC structure may eliminate the technical requirement of sealing the parts that rotate relative to each other.

The transmission plate 39 and the annular piston 14 may be connected by a connection element that supports a relative rotation while transmitting an axial force. The connection element may be the clutch bearing 15 including the first and second races 151 and 152 connected to the components configured to rotate relative to each other, and rolling elements configured to support a relative rotation between the first and second races 151 and 152.

The clutch bearing 15 may be a ball bearing including the outer race 152, the inner race 151, and balls configured to support a relative rotation between the outer race 152 and the inner race 151.

The rotor hub 20 has the first rotor side carrier 251 having a shape in which a concave-convex shape, in which protrusions protruding radially inward and grooves recessed radially outward are alternately disposed in the circumferential direction, extends in the axial direction.

The first rotor side carrier 251 is formed directly on an inner periphery of the axial extension portion 24 of the rotor hub 20, which increases a size of a radius of the first clutch pack 38 as much as possible and increases a clutch capacity.

The input side carrier 33 is connected to a rear end of the input member 30 and extends radially outward from the rear end of the input member 30. The input side carrier 33 may be integrated with the input member 30 by welding or the like.

An outer periphery of the first clutch pack 38 engages with the first rotor side carrier 251, and an inner periphery of the first clutch pack 38 engages with the input side carrier 33. That is, the first rotor side carrier 251 and the input side carrier 33 are disposed to face each other in the radial direction at the outer and inner sides.

A centrifugal end of the transmission plate 39 has a concave-convex shape complementary to a concave-convex shape of the first rotor side carrier 251. The centrifugal end of the transmission plate 39 is disposed forward of the first clutch pack 38 and engages with the first rotor side carrier 251.

The transmission plate 39 may be disposed to be spaced apart forward from a front end of the input side carrier 33. That is, a predetermined interval may be provided between the front end of the input side carrier 33 and the transmission plate 39 positioned at a radial position corresponding to the front end of the input side carrier 33.

The interval prevents the transmission plate 39 from interfering with the input side carrier 33 when the transmission plate 39 presses or releases the engine clutch 37 while moving in the axial direction, and the interval allows the fluid to cool the engine clutch 37 while flowing through the interval.

The transmission plate 39 has a centripetal side inclined surface 391 disposed radially inward of the front end of the input side carrier 33 and obliquely extending forward toward the radial outer side. Further, the transmission plate 39 has a centrifugal side inclined surface 392 disposed radially outward of the front end of the input side carrier 33 and obliquely extending rearward toward the radial outer side. This guides a smooth flow of the fluid and prevents interference between the transmission plate 39 and the input side carrier 33.

A centrifugal side end of the centrifugal side inclined surface 392 may be a portion that presses the first clutch pack 38. The centrifugal side inclined surface 392 has a shape that becomes closer to the first clutch pack 38 toward the radial outer side, such that the transmission plate 39 may more robustly transmit the pressing force to the first clutch pack 38 when a force of the actuator presses the first clutch pack 38.

Meanwhile, the inner race 151 of the clutch bearing 15 may be connected to the annular piston 14 so as to be restricted in rotation. To this end, the annular piston 14 may have a first circumferential stopper 142, and the inner race 151 may have a second circumferential stopper 153 that interferes with the first circumferential stopper 142 in the circumferential direction.

The annular piston 14 and the inner race 151 may also be aligned with each other in the radial direction by the first circumferential stopper 142 and the second circumferential stopper 153.

The annular piston 14 and the inner race 151 adjoin each other in the axial direction so that the axial movement of the annular piston 14 is transmitted to the inner race 151.

The annular piston 14 has an axial stopper 141 that restricts a maximum insertion depth of the annular piston 14 with respect to the annular cylinder 12. A front surface of the axial stopper 141 may face a rear surface of the annular cylinder 12 in the axial direction. Therefore, when the front surface of the axial stopper 141 and the rear surface of the annular cylinder 12 adjoin each other, the annular piston 14 no longer enter the annular cylinder 12. Therefore, a maximum advanced position of the annular piston 14 is accurately determined.

The axial stopper 141 may be provided at a radial outer side of the annular cylinder 12.

The outer race 152 includes a portion extending in the radial direction, and the corresponding portion is disposed at a radial position corresponding to a centripetal side end of the transmission plate 39. Therefore, the outer race 152 and the transmission plate 39 have portions that face each other in the axial direction at the positions identical to each other in the radial direction.

A position deviation of the transmission plate 39 may occur because of a manufacturing error or an assembling tolerance. The deviation may be eliminated by the spacer 16 interposed between the outer race 152 and the transmission plate 39 in the axial direction.

The spacer 16 may also serve to prevent quick abrasion of a component made of a material with low hardness caused by a slip caused by a relative rotation between the outer race 152 and the transmission plate 39. That is, in case that the hardness of the material of the spacer 16 is present between the hardness of the outer race 152 and the hardness of the transmission plate 39, it is possible to reduce abrasion caused by a slip between the spacer 16 and the outer race 152 and reduce abrasion caused by a slip between the spacer 16 and the transmission plate 39.

### [Structure for Cooling Engine Clutch and Actuator]

The first clutch pack 38 and the clutch bearing 15 need to be smoothly cooled and lubricated.

Therefore, a baffle plate 17 may be installed in the housing 10 and guide a flow of the fluid for lubricating the clutch bearing 15 and cooling the clutch pack 38.

The housing 10 may have a flow path for supplying the fluid for this purpose.

Because all the rotor hub 20, the engine clutch 37, and the clutch bearing 15 are rotary elements, a centrifugal force is applied to the fluid accommodated in the space in which the rotor hub 20, the engine clutch 37, and the clutch bearing 15 are installed. Therefore, the fluid, which is supplied through the flow path provided in the housing 10, may be supplied to the space disposed radially inward of the components that need to be cooled and lubricated.

An outlet port of the second flow path 11, through which the fluid is supplied to the second accommodation space 27, is provided radially inward of the clutch bearing 15.

The baffle plate 17 may be connected to the housing 10 at a side closer to the centripetal side than the annular cylinder 12. The baffle plate 17 may be fixed to the housing 10.

The baffle plate 17 has a rearward extension portion 172 disposed radially inward of the clutch bearing 15 and extending rearward from the housing 10.

The rearward extension portion 172 is provided between the outlet port of the second flow path 11 and the clutch bearing 15 in the radial direction. The rearward extension portion 172 is provided radially outward of the outlet port of the second flow path 11 and blocks a direct radial flow of the fluid to prevent the fluid, which is discharged from the outlet port, from performing a turbulent flow because of a cross-sectional flow area that rapidly increases in the second accommodation space 27.

The rearward extension portion 172 is disposed radially outward of the input member 30 and disposed in parallel with the outer peripheral surface of the input member 30 while maintaining a predetermined interval. Therefore, the fluid performs a laminar flow along a space between the rearward extension portion 172 and the input member 30. When the laminar flow of the fluid is induced as described above, the fluid may smoothly flow along a designed route. The fluid supplied through the flow path 11 moves rearward along the space between the outer peripheral surface of the input member 30 and the rearward extension portion 172.

The rearward extension portion 172 may have an orifice hole 171 provided at a position corresponding to the clutch bearing 15 in the axial direction. Therefore, a part of the fluid may be discharged through the orifice hole 171 and supplied to the clutch bearing 15 while the fluid supplied to the inner space of the housing 10 through the second flow path 11 moves in the centrifugal direction by receiving a centrifugal force and then performs a laminar flow by the rearward extension portion 172.

A centrifugal extension portion 173 is provided at a rear end of the rearward extension portion 172 of the baffle plate 17 and extends in the centrifugal direction from the rearward extension portion 172. The centrifugal extension portion 173 is disposed between the clutch bearing 15 and the input side carrier 33 in the axial direction. The centrifugal extension portion 173 is disposed forward of the input side carrier 33 and disposed in parallel with the input side carrier 33 while maintaining a predetermined interval.

Therefore, the fluid, which moves rearward along the space between the outer peripheral surface of the input member 30 and the rearward extension portion 172, moves again in the centrifugal direction along the space between the centrifugal extension portion 173 and the input side carrier 33.

The input side carrier 33 has an inclined surface 336 disposed radially outward of the centrifugal extension portion 173 and obliquely extending forward toward the radial outer side.

Therefore, the fluid, which moves in the centrifugal direction along the space between the centrifugal extension portion 173 and the input side carrier 33, may also move forward while moving radially outward by being guided by the inclined surface 336. The fluid, which moves to the radial inner space of the first clutch pack 38 as described above, may flow into the first clutch pack 38 through a hole, which is provided in an axial extension portion of the input side carrier 33, and the space between the input side carrier 33 and the transmission plate 39 and cool the first clutch pack 38.

Meanwhile, because the input shaft bearing 34 and the hub shaft bearings 221 and 222 also need to be lubricated, routes for supplying oil to the input shaft bearing 34 and the hub shaft bearings 221 and 222 are also provided.

The input member 30 is disposed radially inward of the housing 10. Likewise, the hub shaft 21 is also disposed radially inward of the housing 10. Therefore, it may be difficult to supply the oil to the bearings, which guide the rotations of the rotary components, only by using centrifugal forces generated by the rotary components.

According to the embodiment, in order to supply the oil to the bearings, the branch flow path 113 is provided in the second flow path 11 of the housing 10.

In order to prevent a leak of the fluid, the annular seal 36 is disposed forward of the input shaft bearing 34 and installed between the housing 10 and the input member 30. The outlet port of the branch flow path 113 is opened to the space between the annular seal 36 and the input shaft bearing 34. Because the pressure in the second flow path 11 is higher than the pressure in the second accommodation space 27, the oil is supplied to the space between the annular seal 36 and the input shaft bearing 34 from the portion between the housing 10 and the input member 30 through the branch flow path 113. Because the front side of the corresponding space is closed, the supplied oil moves rearward while wetting the input shaft bearing 34.

According to the embodiment, an interval between the housing 10 and the input member 30 is significantly small at the rear side of the input shaft bearing 34. Therefore, it is difficult for the fluid to flow through a small gap.

The input member 30 has the flow path hole 31 that allows the space between the housing 10 and the input member 30 to communicate with the space between the input member 30 and the rotor hub 20. The inlet port of the flow path hole 31 is provided rearward of the input shaft bearing 34 and forward of the small gap.

Therefore, the oil, which has lubricated the input shaft bearing 34, may flow to the space between the input member 30 and the hub shaft 21 through the flow path hole 31. In this space, the oil lubricates the hub shaft bearings 221 and 222 and moves in the centrifugal direction through the space between the input side carrier 33 and the radial extension portion 23 of the rotor hub 20.

As described above, according to the present invention, it is possible to minimize a leak of oil, minimize a sealing drag, and smoothly supply the oil to the components required to be lubricated and cooled.

While the present invention has been described above with reference to the accompanying drawings, the present invention is not limited to the drawings and the embodiments disclosed in the present specification, and it is apparent that the present invention may be variously changed by those skilled in the art without departing from the technical spirit of the present invention. Further, even though the operational effects of the configurations of the present invention have not been explicitly disclosed and described in the description of the embodiment of the present invention, the effects, which can be expected by the corresponding configurations, should, of course, be acceptable.

## Claims

1. A hybrid driving module, which is disposed between an engine and a transmission in a power system and has a motor configured to provide power to the transmission, the hybrid driving module comprising:
a housing;
an input member connected to the engine;
a rotor hub on which a rotor is installed;
an engine clutch disposed between the input member and the rotor hub; and
an actuator configured to press or release the engine clutch,
wherein the actuator comprises:
an annular cylinder provided in the housing and extending in an axial direction;
an annular piston internally inserted into the annular cylinder and configured to be axially movable relative to the annular cylinder; and
a transmission plate configured to press or release the engine clutch while being moved in the axial direction by the annular piston,
wherein the transmission plate is connected to the rotor hub so that a rotation thereof is restricted and an axial movement thereof is allowed, and
wherein a clutch bearing is interposed between the transmission plate and the annular piston and supports a relative rotation between the transmission plate and the annular piston.

2. The hybrid driving module of claim 1, wherein the rotor hub has a rotor side carrier that restricts a rotation of the engine clutch and allows an axial movement of the engine clutch,
wherein the input member has an input side carrier that restricts a rotation of the engine clutch and allows an axial movement of the engine clutch, and
wherein the transmission plate is connected to the rotor side carrier.

3. The hybrid driving module of claim 2, wherein the rotor side carrier is disposed radially outward of the input side carrier.

4. The hybrid driving module of claim 3, wherein the rotor hub has an axial extension portion configured to support the rotor, and
wherein the rotor side carrier has a concave-convex shape formed in the radial direction from an inner peripheral surface of the axial extension portion and extending in the axial direction.

5. The hybrid driving module of claim 3, wherein the transmission plate is disposed forward of the engine clutch, and
wherein the transmission plate is disposed forward of the input side carrier and spaced apart from the input side carrier.

6. The hybrid driving module of claim 5, wherein the transmission plate comprises:
a centripetal side inclined surface disposed radially inward of a front end of the input side carrier and obliquely extending forward toward a radial outer side; and
a centrifugal side inclined surface disposed radially outward of the front end of the input side carrier and obliquely extending rearward toward the radial outer side.

7. The hybrid driving module of claim 1, wherein the clutch bearing comprises:
a first race connected to the annular piston;
a second race connected to the transmission plate; and
a rolling element disposed between the first race and the second race and configured to support a relative rotation between the first race and the second race, and
wherein the first race is connected to the annular piston and restricted in rotation.

8. The hybrid driving module of claim 7, wherein a spacer is interposed between the second race and the transmission plate to adjust an interval between the engine clutch and the transmission plate.

9. The hybrid driving module of claim 8, wherein hardness of the spacer is present between hardness of the second race and hardness of the transmission plate.

10. The hybrid driving module of claim 1, wherein an axial stopper is provided on the annular piston and restricts a maximum insertion depth of the annular piston with respect to the annular cylinder.

11. The hybrid driving module of claim 10, wherein a front surface of the axial stopper faces a rear surface of the annular cylinder in the axial direction.

12. The hybrid driving module of claim 1, further comprising:
a baffle plate comprising:
a rearward extension portion disposed radially inward of the annular cylinder, connected to the housing, disposed radially inward of the clutch bearing, and extending rearward from the housing; and
a centrifugal extension portion connected to a rear end of the rearward extension portion, disposed rearward of the clutch bearing, and extending in a centrifugal direction from the rearward extension portion.

13. The hybrid driving module of claim 12, wherein the housing has a flow path configured to supply a fluid to a space provided radially inward of the rearward extension portion of the baffle plate, and
wherein the rearward extension portion has an orifice hole provided at a position corresponding to the clutch bearing in the axial direction.

14. The hybrid driving module of claim 13, wherein the rearward extension portion is disposed radially outward of the input member, disposed in parallel with an outer peripheral surface of the input member while maintaining a predetermined interval, and
wherein the centrifugal extension portion is disposed forward of an input side carrier, which extends radially outward from an outer peripheral surface of the input member and is connected to the engine clutch, and disposed in parallel with the input side carrier while maintaining a predetermined interval.

15. The hybrid driving module of claim 14, wherein the input side carrier has an inclined surface disposed radially outward of the centrifugal extension portion and obliquely extending forward toward a radial outer side.

16. The hybrid driving module of claim 13, wherein the input member is supported to be rotatable relative to the housing by means of an input shaft bearing,
wherein an annular seal is provided forward of the input shaft bearing and installed between the housing and the input member to prevent the fluid in the housing from leaking to the outside,
wherein the housing has a branch flow path branching off from the flow path, and
wherein an outlet port of the branch flow path is opened to a space between the annular seal and the input shaft bearing.

17. The hybrid driving module of claim 16, wherein the input member is supported to be rotatable relative to the rotor hub by means of a hub shaft bearing, and
wherein the input member has a flow path hole configured to allow a space between the housing and the input member to communicate with a space between the input member and the rotor hub.
